# EUROPÄISCHE PATENTSCHRIFT

(11) **EP 3 802 048 B1**
(45) Veröffentlichungstag und Bekanntmachung des Hinweises auf die Patenterteilung: **18.09.2024**
(21) Anmeldenummer: 19730714.3
(22) Anmeldetag: 04.06.2019
(51) Int. Cl.: B29C 45/14, B29C 45/56, B32B 38/04, B29C 45/00, B32B 38/06, B60R 13/02, B29C 43/36, B29K 705/00, B29L 31/00, B29C 43/52, B29L 9/00

(54) **VERFAHREN UND ANLAGE ZUR HERSTELLUNG EINES DEKORBAUTEILS, SOWIE DEKORBAUTEIL**
METHOD AND SYSTEM FOR MANUFACTURING A DECORATIVE COMPONENT, AND DECORATIVE COMPONENT
PROCÉDÉ ET INSTALLATION DE FABRICATION D'UN COMPOSANT DÉCORATIF ET COMPOSANT DÉCORATIF

(30) Priorität: 04.06.2018 DE 102018113194
(43) Veröffentlichungstag der Anmeldung: 14.04.2021
(73) Patentinhaber: Prettl, Rolf, 72072 Tübingen (DE)
(72) Erfinder: GEIGER, Peter, 72800 Eningen (DE); KASZKIEL, Grzegorz, 72805 Lichtenstein (DE); BEIL, Theo, 88605 Langenhart (DE)
(74) Vertreter: Witte, Weller & Partner Patentanwälte mbB
(86) Internationale Anmeldenummer: PCT/EP2019/064494
(87) Internationale Veröffentlichungsnummer: WO 2019/234023

(56) Entgegenhaltungen:
- EP-A1- 2 295 293
- WO-A1-2012/001146
- WO-A1-2017/135078
- FR-A1- 3 069 805
- JP-A- H0 788 886
- JP-A- H11 262 964
- US-A1- 2002 101 738
- US-A1- 2003 227 780
- US-A1- 2014 119 038
- US-A1- 2016 089 850

## Beschreibung

Die vorliegende Offenbarung betrifft ein Verfahren zur Herstellung eines hinterleuchtbaren Dekorbauteils, insbesondere eines Blendenbauteils, wobei das Dekorbauteil eine Metalldekorschicht und eine Trägerschicht aus einem Kunststoff aufweist, und wobei das Dekorbauteil zumindest ein hinterleuchtbares Gestaltelement aufweist.

Aus der EP 2 295 293 A1 ist ein Verfahren zum Herstellen eines Bauteils bekannt, das eine flächige Dekorschicht mit zumindest einer Ausnehmung, einer Sichtseite und einer Rückseite, und zumindest eine an der Rückseite angebrachten Trägerschicht aufweist, wobei zwischen der Trägerschicht und der Dekorschicht eine Folie vorgesehen ist, die in zumindest eine Ausnehmung auskleiden soll. Die Folie soll beim Auftragen der Trägerschicht in die zumindest eine Ausnehmung eingepresst werden. Die Trägerschicht soll durch Hinterspritzen der Dekorschicht erzeugt werden, wobei die Folie die Dekorschicht und die Trägerschicht voneinander isolieren soll. Damit eignet sich dieser Ansatz für dünne Dekorschichten, stößt aber bei dickeren Dekorschichten an Grenzen. Insbesondere bei filigranen Strukturen in der Dekorschicht kann dann die Folie nicht derart verformt werden, dass die Ausnehmungen bündig durch die Folie ausgekleidet werden. Wenn im Umkehrschluss die Dekorschicht besonders dünn gestaltet werden muss, dann wird der Benutzer die Dekorschicht nicht als Metallschicht wahrnehmen. Ferner können sich an der Sichtseite Deformationen der Folie ergeben, wenn also die Ausnehmungen nicht absolut bündig befüllt sind und es stattdessen Beulen, etc. gibt. Es gibt einen Zielkonflikt. Darunter kann die optische oder haptische Erscheinung des erzeugten Dekorbauteils leiden.

Aus der EP 0 633 115 B1 ist ein Verfahren zur Herstellung von Elastomer-Dichtringen bekannt, welches auf dem Spritzprägen beruht. Es geht nicht um die Herstellung von Dekorbauteilen mit optischen Gestaltungen. Aus der DE 10 2015 006 566 A1 ist ein Verfahren zur Herstellung eines Dekorteils mit einer Symbolik bekannt, wobei eine Dekorschicht vorgesehen ist, die zur Erzeugung eines erhabenen Reliefs verformt wird, wobei die verformte Dekorschicht dann hinterspritzt wird, und wobei Erhebungen des Reliefs teilweise abgetragen werden, um Durchbrüche zu erzeugen. Ein solches Verfahren eignet sich nicht für metallische Dekorschichten einer bestimmten Mindeststärke, da die Verformbarkeit dickerer Schichten nicht gegeben ist. Die DE 103 50 612 A1 befasst sich mit der Verarbeitung hinterspritzer Dekorfolien zur Erzeugung von Anzeigefeldern, wobei die erzeugten Bauteile aus drei Schichten bestehen - Dekorschicht, Kunststofffolie sowie hinterspritzte Kunststoff-Trägerschicht. Aus der WO 2006/047905 A1 ist ein Verfahren zur Herstellung eines Verbundteils aus einem ersten Formteil und einem zweiten Formteil bekannt, wobei die Herstellung mittels Spritzguss oder Spritzprägen erfolgen kann.

Zumindest in beispielhaften Ausführungsformen betrifft die vorliegende Offenbarung die Herstellung von Einstiegsleisten und/oder Blenden für Fahrzeuge, insbesondere Einstiegsleisten mit Beleuchtungsfunktion. Es kann sich jedoch auch um andere Blendenbauteile handeln, etwa um Blenden für Türverkleidungen, Blenden am Armaturenbrett, etc., die mit einer Beleuchtungsfunktion versehen sind.

Derartige Funktionen werden beispielsweise als Ambient Light, Mood Light, etc. bezeichnet. Derartige Dekorbauteile können zur Benutzerführung, zur Erfassung von Benutzereingaben, zur Erzeugung eines bestimmten ästhetischen Eindrucks und/oder zu Beleuchtungszwecken benutzt werden. Zumindest in beispielhaften Ausführungsformen betrifft die vorliegende Offenbarung die Herstellung von Dekorbauteilen, die an ihrer dem Benutzer zugewandten Frontseite mit einer Metallschicht bzw. einem Metallblech versehen sind.

Ferner betrifft die vorliegende Offenbarung zumindest in beispielhaften Ausführungsformen hinterleuchtbare Dekorbauteile, bei denen Gestaltelemente beleuchtbar sind, wobei im nicht beleuchteten Zustand ein sogenannter Verschwindeeffekt auftreten kann. Mit anderen Worten sind die Gestaltelemente bzw. deren beleuchtbare/hinterleuchtbare Bereiche derart filigran ausgeführt, dass diese in nicht beleuchteten Zustand für das menschliche Auge (zumindest aus einiger Entfernung) kaum oder nicht wahrnehmbar sind.

Das Vorstehende ist jedoch nicht einschränkend zu verstehen. Jedenfalls in weiteren beispielhaften Ausführungsformen betrifft die vorliegende Offenbarung Dekorbauteile, insbesondere Blendenbauteile, allgemeiner Art, die etwa bei Haushaltsgeräten, Haustechnik, Unterhaltungselektronik, aber auch bei Fahrzeugen verwendbar sind.

Zumindest in beispielhaften Ausgestaltungen betrifft die vorliegende Offenbarung Dekorbauteile, die zur Erfassung von Bedienereingaben ausgebildet sind, insbesondere mittels Berührungen und Berührgesten (Touch-Funktionalität). Hierfür sind beispielsweise kapazitive Schalter und/oder kapazitive Sensorfelder (Touch-Folien) vorstellbar. Dies ist jedoch nicht einschränkend zu verstehen. Es sind auch Gestaltungen ohne solche Funktionen vorstellbar.

Aus der DE 11 2013 005 176 T5 ist eine beleuchtete Fahrzeugkomponente bekannt, mit einem Metallbauteil, umfassend ein undurchsichtiges Material, das mehrere Öffnungen aufweist, wobei die Öffnungen gruppiert sind, um mindestens eine Region zu bilden, die eine Umgrenzung definiert; einem lichtdurchlässigen Material, das in mindestens einigen der Öffnungen angeordnet ist; und mit einer Lichtquelle, die einer Rückseite des Metallbauteils Licht zuführt, so dass dieses Licht durch das lichtdurchlässige Material durchgelassen wird, um die Region auf einer Vorderseite des Metallbauteils zu erleuchten. Es wird vorgeschlagen, die Öffnungen elektrochemisch zu erzeugen.

Dekorbauteile mit Metalloberflächen werden generell als hochwertig empfunden. Zu dieser Wahrnehmung kann insbesondere eine Mindestdicke des Metalldekors beitragen. Metalle werden aufgrund ihrer guten spezifischen Wärmeleitfähigkeit bei Berührung - sofern die Umgebungstemperatur niedriger als die Körpertemperatur des Benutzers ist - als "kälter" wahrgenommen als beispielsweise Kunststoffe. Dieses Phänomen erfordert jedoch eine bestimmte Mindestdicke des Metalls, damit genügend Material zum Ableiten der Wärme vorhanden ist.

Deshalb ist es wünschenswert, Dekorbauteile mit einer Metalldekorschicht zu versehen, die eine bestimmte Mindestdicke aufweist, etwa eine Mindestdicke von 0,1 mm, eine Mindestdicke von 0,2 mm, oder eine Mindestdicke von 0,3 mm. Insbesondere dann, wenn die Dicke der Metalldekorschicht deutlich unter 0,1 mm ist, geht die Wärmeleitfähigkeit der Metalldekorschicht zurück, so dass nicht einfach durch Berühren erkennbar ist, ob es sich um eine Metallschicht handelt oder nicht.

Wenn jedoch umgekehrt die Metalldekorschicht eine bestimmte Mindestdicke aufweist, so hat dies Auswirkungen auf die Möglichkeit zur Erzeugung hinterleuchtbarer Gestaltelemente am Dekorbauteil. Hinterleuchtbare Gestaltelemente lassen sich etwa dadurch erzeugen, dass in die Metalldekorschicht Ausnehmungen eingebracht werden, die ausgehend von einer Rückseite des Dekorbauteils beleuchtet/hinterleuchtet werden. Regelmäßig wird dabei ein transparenter oder in sonstiger Weise zumindest teilweise lichtdurchlässiger Kunststoff zur Lichtleitung verwendet.

Dies führt jedoch in der Praxis zu verschiedenen Herausforderungen, vor allem dann, wenn es darum geht, filigrane Gestaltelemente zu erzeugen. Ferner besteht die Gefahr, dass die Ausnehmungen in der Metalldekorschicht insgesamt zu einer unebenen Oberfläche des Dekorbauteils führen.

Vor diesem Hintergrund liegt der vorliegenden Offenbarung die Aufgabe zugrunde, ein Verfahren und eine Anlage zur Herstellung eines hinterleuchtbaren Dekorbauteils anzugeben, die die Herstellung von Dekorbauteilen mit Metalloberflächen, zumindest mit Metalldekorschichten, ermöglichen, wobei die Dekorbauteils ferner in die metallische Schicht eingebrachte Gestaltelemente aufweisen, die beleuchtbar/hinterleuchtbar sind.

Vorzugsweise können die Gestaltelemente derart gestaltet sein, dass sich im nicht beleuchteten Zustand ein Verschwindeeffekt ergibt. Vorzugsweise sind die Gestaltelemente des Dekorbauteils besonders filigran gestaltet. Vorzugsweise ergibt sich an einer dem Benutzer zugewandten Vorderseite des Dekorbauteils ein glatte, bündige Oberfläche. Vorzugsweise eignen sich die Anlage bzw. das Verfahren zur Herstellung von Dekorbauteilen mit Metalloberflächen, die eine bestimmte Mindestdicke aufweisen, so dass die Oberfläche auch bei flüchtiger Berührung als Metall wahrgenommen wird.

Ferner soll im Rahmen der vorliegenden Offenbarung ein Dekorbauteil angegeben werden, dass mit einer offenbarungsgemäßen Anlage bzw. mit dem offenbarungsgemäßen Verfahren herstellbar ist. Vorzugsweise eignet sich das Dekorbauteil zur Kombination mit kapazitiven Schaltern und/oder Berührflächen.

Das Verfahren betreffend wird die Aufgabe der Erfindung durch ein Verfahren zur Herstellung eines hinterleuchtbaren Dekorbauteils gemäß dem unabhängigen Anspruch 1 gelöst. Die abhängigen Ansprüche betreffen vorteilhafte Ausgestaltungen.

Gemäß einem ersten Aspekt bezieht sich die vorliegende Erfindung auf ein Verfahren zur Herstellung eines hinterleuchtbaren Dekorbauteils, insbesondere eines Blendenbauteils, mit den folgenden Schritten:
- Bereitstellung einer Metalldekorschicht aus einem Feinblech, insbesondere einem Dünnblech,
- Fügen der Metalldekorschicht mit einer Trägerschicht aus einem Kunststoff, wobei die Trägerschicht zumindest teilweise transparent oder transluzent ist, und wobei die Trägerschicht im gefügten Zustand eine rückwärtige Schicht hinter der Metalldekorschicht bildet, und
- zumindest abschnittsweises Prägen der Trägerschicht in einem zumindest teilweise erweichten Zustand des Kunststoffs, um eine Mehrzahl von Ausnehmungen in der Metalldekorschicht ausgehend von der rückwärtigen Trägerschicht mit dem Kunststoff zu füllen,

wobei die mit dem Kunststoff befüllten Ausnehmungen Bildpunkte formen, die in Kombination zumindest ein hinterleuchtbares gerastertes Gestaltelement des Dekorbauteils bilden, und
wobei die mit dem Kunststoff befüllten Ausnehmungen bündig mit dem Kunststoff befüllt werden.

Erfindungsgemäß erlaubt nämlich der Prägevorgang ein vollständiges Befüllen der Ausnehmungen, die das hinterleuchtbare Gestaltelement bilden. Im Sinne der vorliegenden Offenbarung ist unter einem vollständig befüllten Zustand ein Zustand zu verstehen, in dem eine Oberfläche des Dekorbauteils auch im Bereich der Gestaltelemente von außen hinreichend glatt bzw. bündig ist. Der Begriff bündig ist auf eine Vorderseite der Metalldekorschicht bezogen, also auf die dem Nutzer zugewandte Seite.

Unter einem gerasterten Gestaltelement ist ein Gestaltelement zu verstehen, das durch mehrere kleine Teilelemente gebildet wird. Bei den Gestaltelementen kann es sich etwa um Symbole, um Text, und/oder um Linien und Ähnliches handeln. Die Gestaltelemente sind vorzugsweise gerastert, also aus mehreren Teilelementen zusammengesetzt.

Vorzugsweise handelt es sich bei dem Dekorbauteil um ein Blendenbauteil für ein Fahrzeug, Haushaltsgerät, für die Haustechnik, etc. Das Blendenbauteil kann grundsätzlich als Bedienblendenteil gestaltet sein.

Das Dekorbauteil ist als Verbundbauteil aus mehreren Schichten ausgeführt. Zumindest umfasst das Verbundbauteil eine Metalldekorschicht und eine Trägerschicht aus einem Kunststoffwerkstoff, insbesondere einem mittels Spritzguss verarbeitbaren und/oder einem laminierbaren Werkstoff. Es ist vorstellbar, dass zusätzliche Schichten vorgesehen sind, etwa zusätzliche Trägerschichten, Sensorschichten (für Touch-Folien, Touch-Schalter, etc.). In einem solchen Fall, wenn rückwärtig, also an der vom Bediener abgewandten Seite des Dekorbauteils, eine weitere Trägerschicht ausgebildet ist, kann die Trägerschicht, die durch Prägen zum Befüllen der Ausnehmungen genutzt wird, als Lichtleitschicht bezeichnet werden.

In beispielhaften Ausführungsformen ergeben sich Gestaltungen, die zwischen der Metalldekorschicht und der Trägerschicht keine prozessbedingte Folie oder dergleichen aufweisen, also keine dritte Schicht, die als Isolationsschicht zwischen der Metalldekorschicht und der Trägerschicht vorgesehen ist. Dies gilt insbesondere für den Bereich der Ausnehmungen. Die Ausnehmungen werden bei diesen beispielhaften Ausführungsformen direkt mit dem Material der Trägerschicht befüllt. Mit anderen Worten weist das Blendenbauteil selbst nur zwei strukturell bedingte Schichten auf, nämlich die Metalldekorschicht und die Trägerschicht. Dem steht nicht entgegen, dass zusätzlich zu den beiden strukturell bedingten Schichten noch weitere Schichten (Sensorschichten, etc.) vorgesehen sein können. Dem steht auch nicht entgegen, dass das Dekorbauteil in beispielhaften Ausführungsformen mit weiteren Strukturteilen verbindbar ist, etwa durch zusätzliche Verfahrensschritte.

Insbesondere handelt es sich bei den Ausnehmungen um kleine Ausnehmungen. Kleine Ausnehmungen sind Ausnehmungen mit kleinem Querschnitt (kleinem Durchmesser, kleinen lateralen Abmessungen). Die Ausnehmungen können auch als miniaturisierte Ausnehmungen, Mini- Ausnehmungen und/oder Mikro-Ausnehmungen bezeichnet werden. Im Sinne der vorliegenden Offenbarung bezieht sich zumindest in beispielhaften Ausführungsformen der Begriff "kleine Ausnehmung" auf solche Ausnehmungen, die nicht oder nicht ohne weiteres in einem Spritzguss-Standard-Verfahren vollständig befüllbar sind. Demgemäß können die kleinen Ausnehmungen auch als filigrane Ausnehmungen bezeichnet werden.

Es handelt sich also um solche Ausnehmungen in der Metalldekorschicht, deren kleinste laterale Ausdehnung so klein im Verhältnis zur Tiefe der Ausnehmung (entsprechend der Dicke der Metalldekorschicht) ist, dass beispielsweise beim Hinterspritzen keine vollständige Befüllung der Ausnehmung gewährleistet ist. Mit anderen Worten erstarrt die Fließfront des flüssigen Kunststoffs in der Ausnehmung bevor diese vollständig und bündig von hinten befüllt ist. Dies ist häufig dann der Fall, wenn der Durchmesser einer kleinen/filigranen Bohrung bzw. die minimale Breite einer Nut klein im Verhältnis zur Tiefe der Ausnehmung ist.

Mit anderen Worten eignet sich das Verfahren für Fertigungsprozesse, bei denen die Metalldekorschicht mit der Trägerschicht hinterspritzt wird. Der Prägevorgang stellt sicher, dass die filigranen Ausnehmungen sicher mit dem Kunststoff befüllt werden.

Die Ausnehmungen können allgemein auch als Öffnungen und/oder Perforationen bezeichnet werden. Die Ausnehmungen bilden zumindest in beispielhaften Ausführungsformen Bildpunkte, aus denen ein gerastertes Gestaltelement entsteht. Der Begriff Bildpunkte ist nicht einschränkend zu verstehen. Bildpunkte können Löcher/Bohrungen sein. Bildpunkte können jedoch auch Mehrecke, Ovale und/oder Langlöcher sein, aus denen in Kombination Gestaltelemente gebildet werden. Bei den Ausnehmungen handelt es sich um Ausnehmungen, die die Metalldekorschicht vollständig durchdringen (Durchgangsöffnungen).

Es versteht sich jedoch, dass das offenbarungsgemäße Verfahren auch in anderen Zusammenhängen anwendbar ist, etwa zur Herstellung von Dekorbauteilen, bei denen die Metalldekorschicht und die Trägerschicht durch Laminieren miteinander gefügt werden. Auch dann stellt der Prägevorgang sicher, dass die kleinen/filigranen Ausnehmungen sicher und bündig mit dem Kunststoffwerkstoff befüllt werden.

Der Kunststoffwerkstoff ist zur Lichtleitung geeignet. Zu diesem Zweck ist der Kunststoffwerkstoff zumindest teilweise transparent oder transluzent gestaltet. In diesem Zusammenhang kann der Begriff "zumindest teilweise" auf räumliche Ausdehnungen und/oder auf einen Transmissionsgrad bezogen sein. Transparenz kann allgemein zur Beschreibung einer Bild- oder Blickdurchlässigkeit verwendet werden. Transluzenz kann allgemein zur Beschreibung einer Lichtdurchlässigkeit beschrieben werden.

Das Dekorbauteil ist mit zumindest einer Lichtquelle versehen und/oder mit zumindest einer Lichtquelle koppelbar, um Licht in die zur Lichtführung vorgesehene Trägerschicht einzukoppeln. Auf diese Weise können die Gestaltelemente hinterleuchtet werden.

Es ist vorstellbar, zumindest einige der Gestaltelemente mit kapazitiven Schaltern/Tasten und/oder mit entsprechenden Bereichen kapazitiver Sensorfelder zu koppeln. Auf diese Weise kann das Dekorbauteil nicht nur zu Beleuchtungszwecken bzw. zur Benutzerführung verwendet werden, sondern auch zur Erfassung von Benutzereingaben.

Gemäß einer beispielhaften Ausführungsform weist das Verfahren ferner den folgenden Schritt auf:
- Erzeugen der Ausnehmungen in der Metalldekorschicht, wobei zumindest einige der Ausnehmungen eine laterale Ausdehnung von kleiner als 0,3 mm, vorzugsweise von kleiner als 0,2 mm aufweisen.

Bei den Ausnehmungen kann es sich um Löcher, Langlöcher, Ellipsen, etc. handeln. Die laterale Ausdehnung kann einen Durchmesser betreffen, die minimale Breite eines Langlochs bzw. einer Ellipse, etc. Relevant für die Befüllbarkeit der Ausnehmung ist insbesondere die kleinste laterale Ausdehnung.

Vorzugsweise sind die Ausnehmungen derart filigran, dass sich ein sogenannter Verschwindeeffekt einstellt. Hierbei handelt es sich um eine Beschriftung, die im unbeleuchteten Zustand nicht lesbar und erst bei Beleuchtung zu erkennen ist.

Es ist vorstellbar, Ausnehmungen mit einer minimalen lateralen Ausdehnung von kleiner 0,1 mm zu erzeugen. Beispielsweise ist es vorstellbar, Bohrungen mit einem Kleinstdurchmesser von kleiner als 0,05 mm oder gar mit einem Kleinstdurchmesser von kleiner als 0,03 mm zu erzeugen. Für die Schaffung solcher filigraner Strukturen eignet sich beispielsweise die Laserbearbeitung, also etwa das Laserschneiden und/oder das Laserbohren. Auf diese Weise kann die gewünschte Rasterung durch Erzeugung einer Vielzahl filigrane Ausnehmungen erzeugt werden.

Es versteht sich, dass in alternativen Ausführungsformen die Ausnehmungen/die Perforierung der Metalldekorschicht auch durch andere Verfahren erzeugbar sind, etwa durch elektrochemische Bearbeitung (Ätzen, etc.).

Die Ausnehmungen können konstante Querschnitte aufweisen. Die Ausnehmungen können jedoch auch Verjüngungen oder sonstige Querschnittsveränderungen umfassen. Derartige Eigenschaften der Ausnehmungen können durch das gewählte Bearbeitungsverfahren zur Erzeugung der Ausnehmungen bedingt sein.

Gemäß einer weiteren beispielhaften Ausführungsform des Verfahrens weist die Metalldekorschicht eine Blechdicke im Bereich von 0,05 mm bis 0,5 mm auf, vorzugsweise im Bereich von 0,1 mm bis 0,3 mm. Beispielsweise kann die Dicke der Metalldekorschicht etwa 0,2 mm betragen. Beispielsweise kann die Dicke der Metalldekorschicht etwa 0,12 mm betragen. Beispielsweise kann die Dicke der Metalldekorschicht etwa 0,25 mm betragen. Demgemäß eignen sich dünne Bleche, deren Blechdicke im Bereich der vorstehend angegebenen Werte liegt.

Die Dicke der Metalldekorschicht sollte derart gewählt werden, dass sich für den Bediener bei Berührung der Oberfläche des Dekorbauteils aufgrund der guten Wärmeleitfähigkeit des Metalls tatsächlich der Eindruck ergibt, ein Metallteil zu berühren. Ferner ist ein Blechmaterial einer gewissen Mindestdicke regelmäßig gut handhabbar und gut zu bearbeiten.

Gemäß einer weiteren beispielhaften Ausführungsform des Verfahrens liegt ein Aspektverhältnis von zumindest einigen der Ausnehmungen der Metalldekorschicht im Bereich von 0,5:1 bis 1,5:1. Vorzugweise liegt das Aspektverhältnis bei etwa 1:1. In einer beispielhaften Ausführungsform liegt das Aspektverhältnis etwa bei 0,8:1 bis 1,2:1. Als Aspektverhältnis wird im Sinne der vorliegenden Offenbarung das Verhältnis aus der Tiefe bzw. Höhe einer Struktur zu ihrer (kleinsten) lateralen Ausdehnung bezeichnet. Je größer das Aspektverhältnis, desto schwieriger wird es, die filigranen Ausnehmungen auf Basis konventioneller Verfahren mit dem Kunststoff zu befüllen.

Beispielsweise führen Ausnehmungen in Form von filigranen Bohrungen mit einem Durchmesser von 0,2 mm in einer Metalldekorschicht mit einer Dicke von 0,2 mm zu einem Aspektverhältnis von 1:1. Beispielsweise führen Ausnehmungen in Form von filigranen Bohrungen mit einem Durchmesser von 0,2 mm in einer Metalldekorschicht mit einer Dicke von 0,3 mm zu einem Aspektverhältnis von 1,5:1. Durch den Prägevorgang wird sichergestellt, dass auch filigrane Strukturen mit verhältnismäßig großen Aspektverhältnissen sicher und bündig mit dem Kunststoffwerkstoff befüllt werden können.

Gemäß einer weiteren beispielhaften Ausführungsform des Verfahrens werden zumindest einige der Ausnehmungen durch eine Laserbearbeitung erzeugt. Die Laserbearbeitung kann auch als Lasermikrobearbeitung bezeichnet werden. Die Laserbearbeitung kann ein Laserschneiden, ein Laserbohren und dergleichen umfassen. Das Laserbohren erlaubt die Erzeugung kreisrunder Löcher, aber auch die Erzeugung von Löchern mit elliptischem Querschnitt, polygonalem Querschnitt, etc. Das Laserbohren erlaubt die Erzeugung von Löchern mit einem hohen Aspektverhältnis. Insbesondere eignet sich das Laserbohren für die Erzeugung von Perforationen, die eine Vielzahl von Löchern pro Flächeneinheit umfassen.

In alternativen Ausführungsformen können die filigranen Strukturen mit den kleinen Ausnehmungen durch elektrochemische Bearbeitung erzeugt werden.

Gemäß einer weiteren beispielhaften Ausführungsform des Verfahrens werden zumindest einige der Ausnehmungen in der Metalldekorschicht erzeugt, bevor die Metalldekorschicht mit der Trägerschicht gefügt wird. Dies betrifft vorzugsweise sämtliche Ausnehmungen in der Metalldekorschicht, die mit dem Kunststoffwerkstoff bündig gefüllt werden sollen. Mit anderen Worten werden die filigranen Strukturen dann in die Metalldekorschicht eingebracht, wenn die Metalldekorschicht noch nicht mit dem Kunststoff gefügt ist, der später in die Ausnehmungen eindringen soll.

Gemäß einer alternativen Ausführungsform des Verfahrens werden zumindest einige der Ausnehmungen in der Metalldekorschicht erzeugt, nachdem die Metalldekorschicht mit der Trägerschicht gefügt wurde. Dies betrifft vorzugsweise sämtliche Ausnehmungen in der Metalldekorschicht, die mit dem Kunststoffwerkstoff bündig gefüllt werden sollen. Mit anderen Worten werden die filigranen Strukturen dann in die Metalldekorschicht eingebracht, wenn die Metalldekorschicht bereits mit dem Kunststoff gefügt ist, der später in die Ausnehmungen eindringen soll.

Gemäß einer weiteren beispielhaften Ausführungsform des Verfahrens erfolgt das Fügen der Metalldekorschicht mit der Trägerschicht und das Prägen der Trägerschicht in einem Spritzprägevorgang. Vorzugsweise wird hierfür ein kombiniertes Spritz- und Prägewerkzeug verwendet. Das kombinierte Verfahren kann auch als Spritzprägen bezeichnet werden. Es handelt sich um ein Insert-Verfahren, bei dem die mit den filigranen Ausnehmungen versehene Metalldekorschicht in das kombinierte Spritz- und Prägewerkzeug gelegt wird.

In diesem Verfahren wird bewusst in Kauf genommen, dass das Spritzen zwar eine Verbindung des Kunststoffs mit der Metalldekorschicht bewirkt, dass aber allein der Spritzguss die Ausnehmungen noch nicht vollständig füllen kann. Das bündige Befüllen der Ausnehmungen wird durch einen Prägevorgang herbeigeführt. Demgemäß kann das kombinierte Spritz- und Prägewerkzeug zwei geschlossene Stellungen aufweisen, nämlich eine erste geschlossene Stellung für den Spritzguss, bei der bewusst noch ein Spalt zwischen den Formhälften vorgesehen ist, und eine zweite, vollständig geschlossene Stellung, die beim Prägen eingenommen wird.

Vorzugsweise erfolgt das Prägen in einem Zustand, in dem der zuvor eingespritzte Kunststoffwerkstoffen noch oder schon wieder erweicht ist. Das kombinierte Spritzprägen hat den Vorteil, dass der Spritzgussvorgang mit niedrigeren Drücken vonstattengehen kann, so dass insgesamt die Belastung des Dekorbauteils beziehungsweise des Werkzeugs verringert wird.

Gemäß einer weiteren beispielhaften Ausführungsform des Verfahrens erfolgt das Prägen der Trägerschicht in einem Thermoprägevorgang, wobei der Kunststoff in einem Prägewerkzeug zumindest abschnittsweise durch Wärmeeintrag erweicht wird. Gemäß dieser Ausführungsform folgt das Prägen im Nachgang zu einem Fügevorgang. Der Fügevorgang kann ein Hinterspritzen (Insert Molding) der Metalldekorschicht umfassen. Der Fügevorgang kann jedoch auch ein Laminieren der Metalldekorschicht mit der Trägerschicht umfassen. Die Trägerschicht kann zuvor mittels Spritzguss, Extrudieren, Thermoformen, oder in sonstiger Weise hergestellt und verarbeitet werden.

Wenn der Kunststoff, aus dem die Trägerschicht gefertigt ist, nach dem Fügen mit der Metalldekorschicht zumindest teilweise erkaltet/erstarrt ist, so erhöht ein erneutes Aufwärmen/Erweichen die Fließfähigkeit des Kunststoffes für den Prägevorgang.

Gemäß einer weiteren beispielhaften Ausgestaltung des Verfahrens geht dem Prägevorgang ein Spritzgussvorgang zur Erzeugung der Trägerschicht und zum Fügen der Metalldekorschicht mit der Trägerschicht voraus. Gemäß einer alternativen Ausgestaltung des Verfahrens geht dem Prägevorgang ein Laminiervorgang zum Fügen der Metalldekorschicht mit der Trägerschicht voraus.

Es ist grundsätzlich vorstellbar, die Ausnehmungen nach dem Fügen zu erzeugen, also wenn die Metalldekorschicht bereits mit der Trägerschicht verbunden ist. Es ist jedoch auch vorstellbar, die Ausnehmungen vor dem Fügen zu erzeugen, also wenn die Metalldekorschicht noch nicht mit der Trägerschicht verbunden ist.

Gemäß einem weiteren Aspekt bezieht sich die vorliegende Offenbarung ferner auf eine Anlage zur Herstellung eines hinterleuchtbaren Dekorbauteils, insbesondere eines Blendenbauteils, wobei die Anlage Folgendes aufweist:
- eine Fügeeinrichtung zum Fügen einer Metalldekorschicht aus einem Feinblech, insbesondere einem Dünnblech, mit einer zumindest teilweise transparenten oder transluzenten Trägerschicht aus einem Kunststoff,
- eine Metallbearbeitungseinrichtung zur Erzeugung einer Mehrzahl von Ausnehmungen in der Metalldekorschicht, wobei die Ausnehmungen mit dem Kunststoff befüllbar sind und Bildpunkte formen, die in Kombination zumindest ein hinterleuchtbares gerastertes Gestaltelement des Dekorbauteils bilden, und
- eine Prägeeinrichtung zum zumindest abschnittsweisen Prägen der Trägerschicht in einem zumindest teilweise erweichten Zustand des Kunststoffs, um die Ausnehmungen in der Metalldekorschicht ausgehend von der rückwärtigen Trägerschicht bündig mit dem Kunststoff zu füllen.

Die Anlage eignet sich zur Durchführung des Verfahrens gemäß einem der hierin genannten Aspekte. Die Anlage und das Verfahren können in ähnlicher Weise weitergebildet/ausgestaltet sein.

Gemäß einer beispielhaften Ausführungsform der Anlage sind die Fügeeinrichtung und die Prägeeinrichtung als integrierte Spritzprägevorrichtung gestaltet. Mit anderen Worten wird zumindest in beispielhaften Ausgestaltungen ein und dieselbe Form für das Fügen und das Prägen verwendet.

Gemäß einer weiteren beispielhaften Ausführungsform der Anlage ist die Fügeeinrichtung als Spritzgussvorrichtung zum Hinterspritzen der Metalldekorschicht gestaltet, wobei die Prägeeinrichtung als von der Fügeeinrichtung separate Thermoprägeeinrichtung gestaltet ist.

Gemäß einer weiteren beispielhaften Ausführungsform der Anlage ist die Fügeeinrichtung als Laminiervorrichtung zum Verbinden der Metalldekorschicht mit der Trägerschicht gestaltet, wobei die Prägeeinrichtung als von der Fügeeinrichtung separate Thermoprägeeinrichtung gestaltet ist.

Gemäß einem weiteren Aspekt bezieht sich die vorliegende Offenbarung ferner auf ein hinterleuchtbares Dekorbauteil, insbesondere ein Blendenbauteil, das Folgendes aufweist:
- eine Metalldekorschicht aus einem Feinblech, insbesondere einem Dünnblech,
- eine Trägerschicht aus einem Kunststoff, die mit der Metalldekorschicht gefügt ist,

wobei die Trägerschicht zumindest teilweise transparent oder transluzent ist,
wobei die Trägerschicht eine rückwärtige Schicht hinter der Metalldekorschicht bildet,
wobei die Metalldekorschicht eine Mehrzahl von Ausnehmungen aufweist, die mit dem Kunststoff der Trägerschicht ausgehend von der rückwärtigen Trägerschicht gefüllt sind,
wobei die mit dem Kunststoff befüllten Ausnehmungen Bildpunkte formen, die in Kombination zumindest ein hinterleuchtbares gerastertes Gestaltelement des Dekorbauteils bilden, und
wobei die mit dem Kunststoff befüllten Ausnehmungen bündig mit dem Kunststoff befüllt sind.

Beispielsweise handelt es sich bei dem Dekorbauteil um ein Bauteil, das gemäß zumindest einer Ausführungsform des hierin beschriebenen Verfahrens und/oder mit zumindest einer Ausführungsform der hierin beschriebenen Anlage hergestellt ist.

Das Dekorbauteil ist insbesondere als Blendenbauteil, Verkleidungsteil, Eintrittsleiste, Fußleiste oder ähnliches Bauteil gestaltet und zur Verwendung in Fahrzeugen, bei Haushaltsgeräten und/oder in der Haustechnik ausgebildet.

Die Metalldekorschicht bildet eine vordere/äußere Oberfläche des Dekorbauteils, die dem Benutzer zugewandt ist. Die Trägerschicht ist hinter/unterhalb der Metalldekorschicht ausgebildet. Es versteht sich, dass das Bauteil weitere Schichten aufweisen kann, etwa zumindest eine Sensorschicht mit kapazitiven Tastern, Schaltern und/oder Berührfeldern (Touch-Felder).

In einer beispielhaften Ausführungsform weist das Dekorbauteil ferner zumindest eine Lichtquelle auf, die derart mit der Trägerschicht gekoppelt ist, dass das Licht, das von der Lichtquelle emittiert wird, in Richtung auf die befüllten Ausnehmungen geleitet wird, um dort zumindest ein gerastertes Gestaltelement zu hinterleuchten.

In einer weiteren beispielhaften Ausführungsform weist das Dekorbauteil zumindest eine Schnittstelle zur Kopplung mit zumindest einer Lichtquelle auf, um Licht, das von der Lichtquelle emittiert wird, über die Trägerschicht in Richtung auf die befüllten Ausnehmungen zu leiten, um dort zumindest ein gerastertes Gestaltelement zu hinterleuchten.

In einer weiteren beispielhaften Ausführungsform weist das Dekorbauteil neben der lichtleitenden Trägerschicht zumindest eine weitere rückwärtige Kunststoffschicht auf, die grundsätzlich auch als Rahmen/Träger gestaltet sein kann.

Demgemäß ist es vorstellbar, dass die Trägerschicht lichtleitende Abschnitte und nicht lichtleitende Abschnitte aufweist. Demgemäß kann die Trägerschicht selbst auch als Verbundbauteil gestaltet sein.

Am Dekorbauteil können weitere Elemente ausgebildet sein, etwa Rahmenteile, Anbauteile, und dergleichen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung und Erläuterung mehrerer beispielhafter Ausführungsbeispiele unter Bezugnahme auf die Zeichnungen. Es zeigen:
- Fig. 1 eine: Teildarstellung einer Ausführungsform eines hinterleuchtbaren Dekorbauteils in frontaler Ansicht;
- Fig. 2A eine: vergrößerte Teilansicht einer mit A bezeichneten Einzelheit aus Fig. 1 zur Veranschaulichung der Gestaltung eines hinterleuchtbaren Gestaltelements des Dekorbauteils;
- Fig. 2B, 2C: weitere vergrößerte Teilansichten zur Veranschaulichung weiterer Ausführungsformen des in Fig. 2A gezeigten Gestaltelements;
- Fig. 3A-3E: verschiedene schematische Darstellungen zur Veranschaulichung von Fertigungsschritten einer beispielhaften Ausführungsform eines Verfahrens zur Herstellung eines Dekorbauteils, das hinterleuchtbare Gestaltelemente aufweist;
- Fig. 4A-4D: verschiedene schematische Darstellungen zur Veranschaulichung von Fertigungsschritten einer weiteren beispielhaften Ausführungsform eines Verfahrens zur Herstellung eines Dekorbauteils, das hinterleuchtbare Gestaltelemente aufweist;
- Fig. 5A-5D: verschiedene schematische Darstellungen zur Veranschaulichung von Fertigungsschritten einer weiteren beispielhaften Ausführungsform eines Verfahrens zur Herstellung eines Dekorbauteils, das hinterleuchtbare Gestaltelemente aufweist;
- Fig. 6 ein: schematisches, vereinfachtes Blockschaltbild einer beispielhaften Ausführungsform einer Anlage zur Herstellung eines hinterleuchtbaren Dekorbauteils;
- Fig. 7 ein: schematisches, vereinfachtes Blockschaltbild einer weiteren beispielhaften Ausführungsform einer Anlage zur Herstellung eines hinterleuchtbaren Dekorbauteils;
- Fig. 8: ein schematisches Blockdiagramm zur Veranschaulichung einer beispielhaften Ausführungsform eines Verfahrens zur Herstellung eines hinterleuchtbaren Dekorbauteils; und
- Fig. 9: ein schematisches Blockdiagramm zur Veranschaulichung einer weiteren beispielhaften Ausführungsform eines Verfahrens zur Herstellung eines hinterleuchtbaren Dekorbauteils.

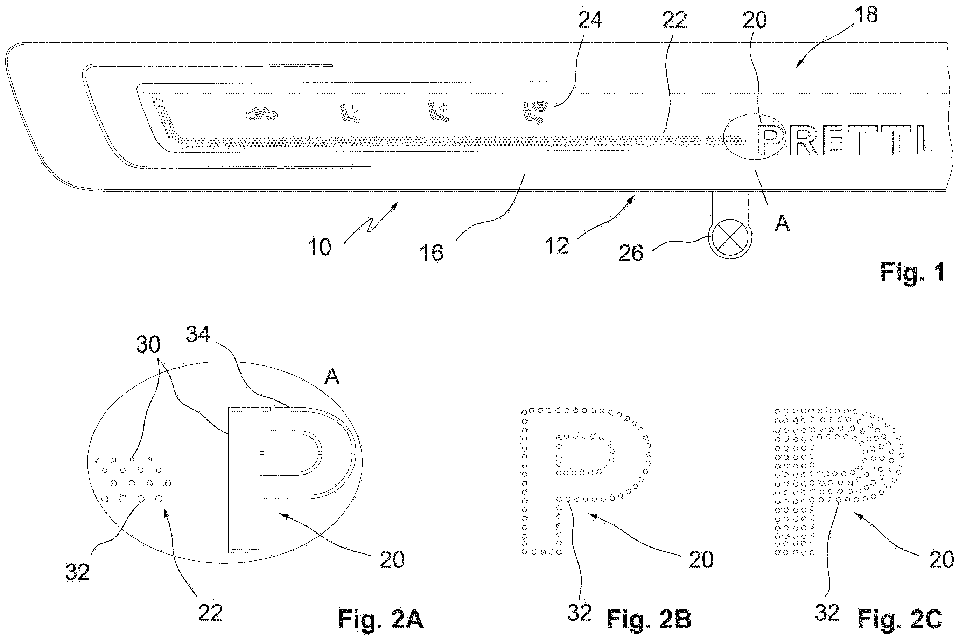

Fig. 1 veranschaulicht anhand einer Teildarstellung eine beispielhafte Ausführungsform eines insgesamt mit 10 bezeichneten Dekorbauteils. Das Dekorbauteil10 ist als Blendenbauteil 12 gestaltet, etwa zur Verwendung in einem Fahrzeug. Beispielhaft ist die Verwendung als Einstiegsleiste, Bestandteil einer Türverkleidung oder als Bedienblendenteil am Armaturenbrett oder in der Nähe davon vorstellbar. Wie vorstehend bereits ausgeführt ist es auch vorstellbar, das Dekorbauteil 10 bei Haushaltsgeräten, in der Haustechnik und für weitere ähnliche Anwendungen zu nutzen.

Das Blendenbauteil 12 umfasst eine Metalldekorschicht 16, die aus einem dünnen Blech hergestellt ist. Es kann sich beispielsweise um ein Stahlblech, ein Aluminiumblech oder Ähnliches handeln. Die Metalldekorschicht 16 definiert eine dem Benutzer zugewandte Oberfläche des Dekorbauteils 10.

Das Dekorbauteil 10 weist Gestaltelemente 18 auf, die in die Metalldekorschicht 16 eingebracht sind. Beispielhaft handelt es sich bei den Gestaltelementen 18 um Text bzw. eine Beschriftung (Gestaltelement 20), um Linien und ähnliche Muster (Gestaltelement 22), sowie um Symbole (Gestaltelement 24). Ferner ist in Fig. 1 ein mit 26 bezeichneten Lichtquelle angedeutet, die Bestandteil des Dekorbauteils 10 oder zumindest mit diesem gekoppelt sein kann. Über die Lichtquelle 26 kann Licht in eine transparente/transluzente Lichtleitschicht (nachfolgend auch bezeichnet als Trägerschicht) des Dekorbauteils 10 eingekoppelt werden, um die Gestaltelemente 18 von hinten zu beleuchten.

Fig. 2A zeigt eine vergrößerte Darstellung eines mit A bezeichneten Ausschnitts aus Fig. 1. Die Darstellung in Fig. 2A zeigt, dass die Gestaltelemente 18 durch Ausnehmungen 30 in Form von Rasterelementen 32, 34 gebildet werden. Mit anderen Worten werden die Gestaltelemente 18 jeweils durch eine Vielzahl kleiner/filigraner Ausnehmungen 30 in der Metalldekorschicht 16 gebildet, die Rasterelemente 32, 34 bilden. Die Ausnehmungen 30 können auch als Öffnungen bezeichnet werden.

Das mit 22 bezeichnete linienartige Gestaltelement wird beispielhaft durch eine Mehrzahl von Rasterelementen 32 gebildet, die als Löcher oder Bohrungen gestaltet sind. Bereits aus Fig. 2A wird ersichtlich, dass unterschiedlich große Löcher vorgesehen sein können. Das mit 20 bezeichnete textförmige Gestaltelement wird beispielhaft durch eine Mehrzahl von Rasterelementen 34 gebildet, die nutförmig oder schlitzförmig gestaltet sind.

Vorzugsweise sind die durch die Ausnehmungen 30 gebildeten Rasterelemente 32, 34 derart filigran gestaltet, dass die damit gebildeten Gestaltelemente 18 auf der Metalldekorschicht 16 nicht oder nur kaum sichtbar sind, wenn die Gestaltelemente 18 nicht aktiv hinterleuchtet sind. Etwas Derartiges wird als Verschwindeeffekt bezeichnet.

Fig. 2B und Fig. 2C zeigen alternative Möglichkeiten zur rasterbasierten Erzeugung des textförmigen Gestaltelements 20. In Fig. 2B wird das textförmige Gestaltelement 20 durch voneinander beabstandete Reihen von Rasterelementen 32 in Form von Löchern gebildet, die Umrisse des Gestaltelements 20 darstellen. In Fig. 2C wird das textförmige Gestaltelement 20 durch eine flächige Anordnung (Matrix) von Rasterelementen 32 in Form von Löchern gebildet, die die Fläche des Gestaltelements 20 darstellen. Idealerweise sind die in Fig. 2A, 2B, und 2C gezeigten Rasterelemente 32, 34 derart filigran, dass die Rasterung aus einer üblichen Entfernung, aus der ein Bediener die Gestaltelemente 18 betrachtet, nicht deutlich sichtbar/auflösbar ist. Insgesamt kann sich somit ein sehr hochwertiger ästhetischer Eindruck ergeben.

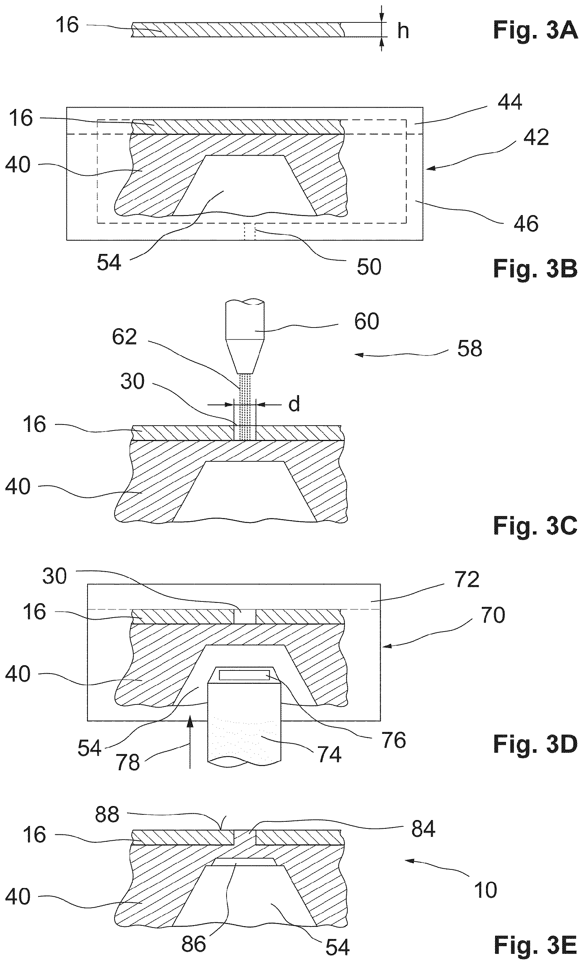

Mit Bezugnahme auf die Figuren 3A bis 3E wird anhand schematischer, stark vereinfachter Teilansichten eine beispielhafte Abfolge eines Verfahrens zur Herstellung eines hinterleuchtbaren Dekorbauteils 10 (vergleiche die Darstellung in Fig. 1) veranschaulicht.

Fig. 3A zeigt eine geschnittene Seitenansicht eines dünnen Blechs aus Metall, das eine Metalldekorschicht 16 bilden soll. Eine Dicke des Blechs ist mit h bezeichnet. Die dicke h kann etwa 0,1 mm bis 0,5 mm betragen. Beispielhaft beträgt die Dicke h 0,2 mm, 0,3 mm, oder einen Zwischenwert. In zumindest einigen Ausführungsformen wird die Dicke h des Blechs derart gewählt, dass sich zumindest bei flüchtigen Berührungen durch die hohe Wärmeleitfähigkeit des Metalls für einen Benutzer der Eindruck ergibt, ein Metallbauteil zu berühren und nicht nur eine dünne Folie.

Fig. 3B veranschaulicht zusätzlich zur Metalldekorschicht 16 eine Trägerschicht 40, die aus einem Kunststoffwerkstoff besteht. Die Trägerschicht 40 ist zumindest abschnittsweise zumindest teilweise transluzent und/oder transparent. Mit anderen Worten ist die Trägerschicht 40 zumindest abschnittsweise zum Leiten von Licht ausgebildet.

Fig. 3B veranschaulicht ferner eine Fügeeinrichtung 42, die auch als Fügewerkzeug bezeichnet werden kann. Beispielhaft ist die Fügeeinrichtung 42 als Spritzgusswerkzeug zur Verarbeitung von thermoplastischen Materialien ausgestaltet. Dies ist jedoch nicht einschränkend zu verstehen.

In der in Fig. 3B lediglich beispielhaft dargestellten Gestaltung weist die Fügeeinrichtung 42 eine erste Formhälfte 44 und eine zweite Formhälfte 46 auf. Die beiden Formhälften 44, 46 definiert zwischen sich eine mit dem thermoplastischen Kunststoff befüllbare Kavität. In der in Fig. 3B gezeigten Ausgestaltung ist die Fügeeinrichtung 42 als Hinterspritzeinrichtung gestaltet. Mit anderen Worten ist die Fügeeinrichtung 42 dazu ausgebildet, mittels Insert-Molding die Trägerschicht 40 zu erzeugen und diese gleichsam fest mit der zuvor in die Formhälfte 44 eingebrachten Metalldekorschicht 16 zu verbinden.

Fig. 3B zeigt ferner einen Kanal 50 für einen Anguss sowie eine Vertiefung 54 in der Trägerschicht 40, die durch die Gestaltung der Formhälfte 46 definiert ist. Dies ist jedoch nicht einschränkend zu verstehen.

Fig. 3C veranschaulicht einen Fertigungsschritt, der zumindest in beispielhaften Ausführungsformen dann stattfindet, wenn das hinterspritzte Bauteil, umfassend die Metalldekorschicht 16 sowie die Trägerschicht 40 aus der Fügeeinrichtung 42 entfernt wurden. Fig. 13 zeigt eine Metallbearbeitungseinrichtung 58, welche ein Schneidwerkzeug 60 umfasst. Das Schneidwerkzeug 60 kann auch als Bohrwerkzeug bezeichnet werden. Beispielhaft handelt es sich um ein Laserschneidwerkzeug. Das Schneidwerkzeug 60 erzeugt eine Laserstrahlung 62. Mit dieser energiereichen Strahlung können Ausnehmungen/Öffnungen 30 in die Metalldekorschicht 16 eingebracht werden.

Es versteht sich, dass das Schneidwerkzeug 60 nicht unbedingt als Laserschneidwerkzeug ausgestaltet sein muss. Andere Arten von Schneidwerkzeugen sind vorstellbar, sofern mit diesen Schneidwerkzeugen die gewünschten filigranen Strukturen erzeugt werden können. Es versteht sich, dass eine Mehrzahl von Ausnehmungen 30 mit der Metallbearbeitungseinrichtung 58 in die Metalldekorschicht 16 eingebracht werden kann.

Die in Fig. 3C beispielhaft gezeigte Ausnehmung 30 weist eine laterale Ausdehnung d auf. Die laterale Ausdehnung d entspricht im Allgemeinen einer kleinsten lateralen Ausdehnung der Ausnehmung 30. Wenn es sich bei der Ausnehmung 30 um eine Bohrung handelt, entspricht die laterale Ausdehnung d dem Durchmesser der Bohrung. Beispielhaft beträgt die laterale Ausdehnung d 0,1 mm bis 0,5 mm, vorzugsweise 0,1 mm bis 0,3 mm, weiter bevorzugt 0,1 mm bis 0,2 mm.

Das Verhältnis aus Dicke h der Metalldekorschicht 16 und der lateralen Ausdehnung d der Ausnehmung 30 kann auch als Aspektverhältnis bezeichnet werden. Das Aspektverhältnis kann etwa Werte von 0,5:1 bis 1,5:1 aufweisen. Beispielhaft beträgt das Aspektverhältnis etwa 1:1. Derartige Aspektverhältnisse, verbunden mit der Randbedingung, dass die Gestaltelemente 18 auf der Metalldekorschicht 16 vorzugsweise im unbeleuchteten Zustand aufgrund des Verschwindeeffekts nur schwer oder gar nicht sichtbar sein sollen, können bei der Fertigung zu Problemen führen, wenn es gewünscht ist, dass die Ausnehmungen 30 vollständig mit dem Kunststoffmaterial, aus dem die Trägerschicht 40 gebildet ist, befüllt werden. Die Strukturen sind derart filigran, dass der Kunststoff beim Spritzgießen nicht einfach so vollständig und bündig (bezogen auf eine Vorderseite des Dekorbauteils 10) in die Ausnehmungen 30 eindringen kann.

Vor diesem Hintergrund werden im Rahmen der vorliegenden Offenbarung diverse Ansätze gezeigt, bei denen ein Prägevorgang genutzt wird, um das Kunststoffmaterial vollständig in die Ausnehmungen 30 einzubringen.

In diesem Zusammenhang veranschaulicht Fig. 3D eine Prägeeinrichtung 70, die auch als Prägewerkzeug bezeichnet werden kann. Beispielhaft umfasst die Prägeeinrichtung 70 einen Gegenhalter 72, der die Metalldekorschicht 16 beim Prägen abstützt und ferner eine Zieloberfläche für die Metalldekorschicht 16 und die mit dem Kunststoffwerkstoff befüllten Ausnehmungen 30 definiert. Das Prägen erfolgt beispielhaft durch einen Prägestempel 74, der rückwärtig auf die Trägerschicht 40 einwirkt, um (erweichtes) Kunststoffmaterial in die Ausnehmungen 30 hinein zu drängen. Vorzugsweise erfolgt das Prägen in einem zumindest teilweise erweichten Zustand des Kunststoffmaterials. Zu diesem Zweck ist die Prägeeinrichtung 70 beispielhaft mit einer Heizeinrichtung 76 versehen, die in dem in Fig. 3D gezeigten Ausführungsbeispiel beim Prägestempel 74 vorgesehen ist. Ein mit 78 bezeichneter Pfeil veranschaulicht eine Bewegung des Prägestempels 74.

Fig. 3E veranschaulicht einen Zustand nach dem Prägen, bei dem die Ausnehmungen 30 der Metalldekorschicht 16 in gewünschter Weise bündig mit dem Kunststoffmaterial befüllt sind, vergleiche das Bezugszeichen 84, welches die Füllung zeigt. Im rückwärtigen Bereich hat der Prägestempel 74 (zusätzlich zur Vertiefung 54) eine Senkung 86 in der Trägerschicht 40 erzeugt. Insgesamt kann somit eine ebene und bündige (frontale) Oberfläche 88 für die Metalldekorschicht 16 und folglich für das Dekorbauteil 10 erzeugt werden.

Für eine Hinterleuchtung der Gestaltelemente 18, die sich durch eine Kombination mehrerer Ausnehmungen 30 ergeben, wird das Dekorbauteil 10 mit einer Lichtquelle (vergleiche Fig. 1) versehen oder gekoppelt. Die Trägerschicht fungiert dann als Lichtleiter zu den Ausnehmungen 30.

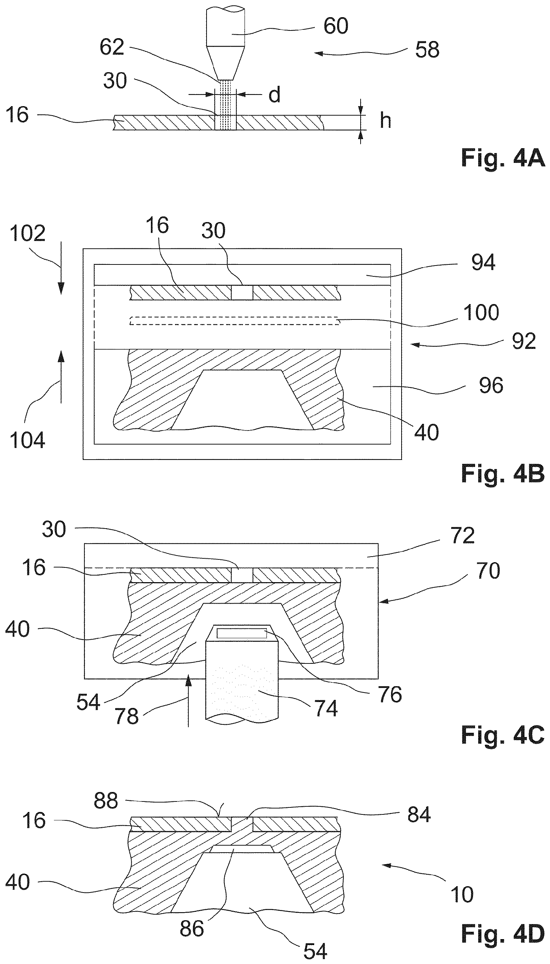

Mit Bezugnahme auf die Figuren 4A bis 4D wird anhand schematischer, stark vereinfachter Teilansichten eine weitere beispielhafte Abfolge eines Verfahrens zur Herstellung eines hinterleuchtbaren Dekorbauteils 10 (vergleiche die Darstellung in Fig. 1) veranschaulicht.

Das in den Figuren 4A bis 4D veranschaulichte Verfahren unterscheidet sich von dem in den Figuren 3A bis 3E gezeigten Verfahren einerseits dadurch, dass die Ausnehmungen 30 durch die Metallbearbeitungseinrichtung 58 bereits dann in die Metalldekorschicht 16 eingebracht werden, wenn diese noch nicht mit der Trägerschicht 40 gefügt ist, vergleiche hierzu auch Fig. 4A. Auch in Fig. 4A ist die Metallbearbeitungseinrichtung 58 beispielhaft als Laserbearbeitungseinrichtung gestaltet und mit einem Schneidwerkzeug/Bohrwerkzeug 60 versehen, das einen Laser zur Erzeugung von Laserstrahlung 62 aufweist.

Wie vorstehend bereits ausgeführt weist die Metalldekorschicht 16 eine Dicke h auf. Ferner weisen die Ausnehmungen 30 eine (kleinste) laterale Ausdehnung d auf. Bei der Ausdehnung d kann es sich um einen Durchmesser handeln, wenn die Ausnehmungen 30 als Bohrungen/kreisrunde Löcher gestaltet sind. Die Ausnehmungen 30 sind filigran gestaltet und erlauben die Bildung gerasterter Gestaltelemente 18, vergleiche auch Fig. 1.

Fig. 4B veranschaulicht eine mit 92 bezeichnete Fügeeinrichtung, welche zum Laminieren der Metalldekorschicht 16 mit der bereitgestellten Trägerschicht 40 ausgebildet ist. Die Trägerschicht 40 kann zuvor in einem Spritzgussprozess, einem Extrusionsprozess, einem Thermoformprozess oder in sonstiger Weise erzeugt und bearbeitet werden. Durch das Laminieren kann ein stoffschlüssiges Fügen zwischen der Metalldekorschicht 16 und der Trägerschicht 40 bewirkt werden. Mit anderen Worten kann das Laminieren ein Verkleben Metalldekorschicht 16 und der Trägerschicht 40 umfassen. Andere Wirkprinzipien sind denkbar.

Beispielhaften weist die Fügeeinrichtung 92 einen ersten Halter 94 und einen zweiten Halter 96 auf. Am ersten Halter 94 ist die Metalldekorschicht 16 mit den Ausnehmungen 30 aufgenommen. Am zweiten Halter 96 ist die Trägerschicht 40 aufgenommen. In Fig. 4B veranschaulicht eine gestrichelte Darstellung eine Fügeschicht 100, welche zusätzlich zur Trägerschicht 40 und zur Metalldekorschicht 16 vorgesehen sein kann. Die Fügeschicht 100 dient zur Haftvermittlung zwischen der Trägerschicht 40 und der Metalldekorschicht 16. Es ist jedoch auch vorstellbar, die Trägerschicht 40 und die Metalldekorschicht 16 direkt und ohne zwischengeschaltete Fügeschicht 100 miteinander zu verbinden.

Das Laminieren kann unter Druckanwendung und/oder Wärmeanwendung durchgeführt werden. Eine Bewegung der beiden Halter 94, 96 wird durch mit 102, 104 bezeichnete Pfeile veranschaulicht.

Ähnlich wie bei dem in Zusammenhang mit den Figuren 3A bis 3E veranschaulichten Verfahrensablauf sieht auch der Verfahrensablauf gemäß den Figuren 4A bis 4D vor, den Kunststoff, der die Trägerschicht 40 bildet, in einem teilweise erweichten Zustand in die Ausnehmungen 30 hinein zu drängen, um die gewünschte bündige Gestaltung zu erzeugen.

Fig. 4C veranschaulicht, dass zu diesem Zweck eine Prägeeinrichtung 70 vorgesehen ist, die einen Gegenhalter 72 und einen Prägestempel 74 aufweist. Der Prägestempel 74 weist eine Heizeinrichtung 76 auf. Ein mit 78 bezeichneter Pfeil veranschaulicht die Bewegung des Prägestempels 74 beim Prägen, wobei der Prägestempel 74 in eine Vertiefung 54 der Trägerschicht 40 einfährt, um dort erweichtem Material zu verdrängen, welches dann die Ausnehmungen 40 bündig schließen soll.

Es versteht sich, dass ein Prägestempel 74 einer einzigen Ausnehmung 30, ferner jedoch auch einer Mehrzahl von Ausnehmungen 30 zugeordnet sein kann. Da die Ausnehmungen 30 vorzugsweise filigran gestaltet sind und kleine laterale Mindestausdehnungen aufweisen, ist es denkbar, mit einem einzigen Prägestempel 74 eine Mehrzahl oder gar Vielzahl von Ausnehmungen 30 mittels Prägen zu befüllen.

Fig. 4D veranschaulicht das Dekorbauteil 10 im gefügten Zustand. Kunststoffmaterial der Trägerschicht 40 wurde in die Ausnehmungen 30 der Metalldekorschicht 16 hineingedrängt, um dort eine Füllung 84 zu bilden. Die Oberfläche 88 des Dekorbauteils 10 beziehungsweise der Metalldekorschicht 16 weist vorzugsweise eine glatte und bündige Gestaltung auf.

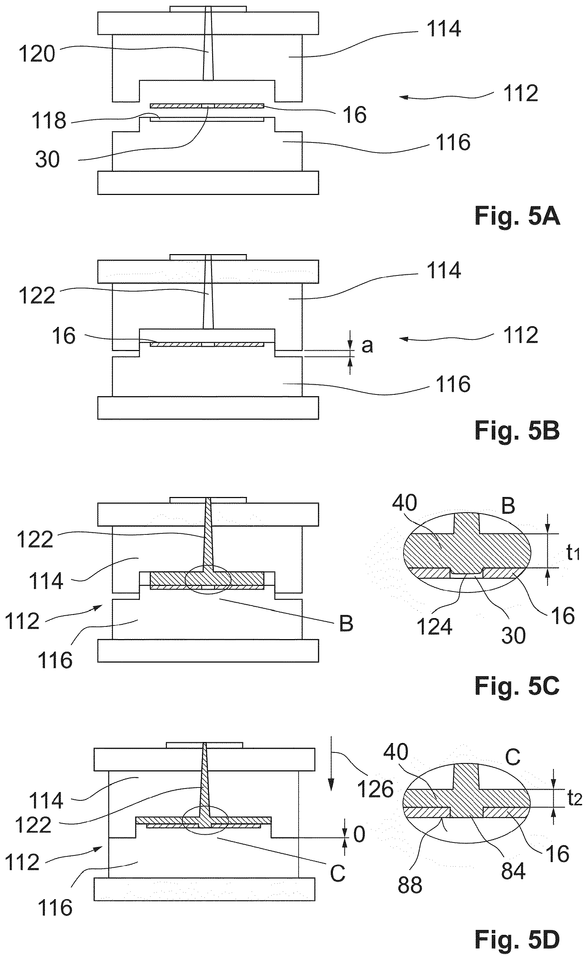

Mit Bezugnahme auf die Figuren 5A bis 5D wird anhand schematischer, stark vereinfachter Teilansichten eine weitere beispielhafte Abfolge eines Verfahrens zur Herstellung eines hinterleuchtbaren Dekorbauteils 10 (vergleiche die Darstellung in Fig. 1) veranschaulicht.

Ähnlich wie bei den zuvor schon veranschaulichten Ausgestaltungen des Herstellverfahrens geht es darum, ein Dekorbauteil 10 bereitzustellen, welches eine Metalldekorschicht 16 und eine Trägerschicht 40 aufweist, die miteinander gefügt sind, wobei die Metalldekorschicht 16 mit einer Mehrzahl von Ausnehmungen 30 versehen ist, und wobei Kunststoffmaterial der Trägerschicht 40 diese Ausnehmungen 30 bündig füllt.

In der anhand der Figuren 5A bis 5D veranschaulichten Ausführungsform wird eine Spritzprägevorrichtung 112 einerseits genutzt, um die Metalldekorschicht 16 zu Hinterspritzen, und andererseits, um den Prägevorgang zur bündigen Befüllung der Ausnehmungen 30 durchzuführen.

Die Spritzprägevorrichtung 112 kann auch als kombiniertes Spritz- und Prägewerkzeug bezeichnet werden. Die Spritzprägevorrichtung 112 weist eine erste Formhälfte 114 und eine zweite Formhälfte 116 auf. In der zweiten Formhälfte 116 ist eine Aufnahme 118 zur Aufnahme der Metalldekorschicht 16 ausgebildet. Demgemäß kann die Metalldekorschicht 16 als Insert in das Werkzeug der Spritzprägevorrichtung 112 eingelegt und dort hinterspritzt werden.

In der ersten Formhälfte 114 ist ein Kanal 120 ausgebildet, durch den die Spritzmasse (Schmelze) in die durch die beiden Formhälften 114, 116 definierte Kavität eindringen kann. Fig. 5A zeigt einen Zustand, in dem die beiden Formhälften 114 und 116 geöffnet sind, und in dem die Metalldekorschicht 16 noch nicht in der Aufnahme 118 aufgenommen ist.

In dem in Fig. 5B veranschaulichten Zustand ist die Metalldekorschicht 16 in der Aufnahme 118 angeordnet. Die Formhälften 114, 116 sind teilweise, aber noch nicht vollständig geschlossen. Zwischen den beiden Formhälften 114, 116 verbleibt ein Prägespalt a. Mit anderen Worten werden die beiden Formhälften 114, 116 noch nicht in ihre vollständig geschlossene Position (vergleiche Fig. 5D) verfahren. Demgemäß ist die mit dem Spritzgusswerkstoff bewegbar Kavität etwas größer als die Kavität für die Trägerschicht 40, die im vollständig geschlossenen Zustand der beiden Formhälften 114, 116 definiert ist.

Fig. 5C veranschaulicht einen Spritzgussvorgang. Über den Kanal 120 wird Spritzmasse eingespritzt und bildet dort einen Anguss 122. Die Kavität zwischen den beiden Formhälften 114, 116 wird mit dem Spritzgussmaterial befüllt. Die Einzelheit B in Fig. 5C veranschaulicht einerseits eine (temporäre) Dicke t1 der Trägerschicht 40. Ferner zeigt die Einzelheit B in Fig. 5C, dass die Ausnehmung 30 bei dem Spritzgussvorgang teilweise, aber nicht vollständig befüllt wird. Die Teilfüllung ist mit 124 bezeichnet. Wenn die Fließfronten dort schnell erstarrt, womit häufig gerechnet werden muss, dann ist es nicht möglich, die Ausnehmung 30 durch einen Spritzgussvorgang vollständig zu befüllen.

Der Vollständigkeit halber wird angemerkt, dass in den Figuren 5A bis 5D das Aspektverhältnis der Ausnehmung 30 vorrangig aus Veranschaulichungsgründen recht niedrig ist und damit nicht unbedingt den Zielbereichen für das Aspektverhältnis entspricht, welches im Rahmen der vorliegenden Offenbarung auch mit einer vollständigen Befüllung durch das Kunststoffmaterial ermöglicht werden soll.

An den in Fig. 5C veranschaulichten Spritzgussvorgang schließt sich ein Prägevorgang an. Dieser wird in Fig. 5D gezeigt. Vorzugsweise folgt der Prägevorgang mit einem bestimmten zeitlichen Versatz zu dem Spritzgussvorgang, so dass das Material, das die Trägerschicht 40 bildet, noch hinreichend weich ist, um durch das Prägen vollständig und bündig in die Ausnehmung 30 eingebracht werden zu können.

In Fig. 5D veranschaulicht ein mit 126 bezeichneter Pfeil die entsprechende Relativbewegung zwischen der ersten Formhälfte 114 und der zweiten Formhälfte 116. Die Einzelheit C in Fig. 5D zeigt ferner, dass sich nunmehr bei der Trägerschicht 40 eine (finale) Dicke t2 eingestellt hat, welche kleiner als die (temporäre) Dicke t1 ist. Ferner zeigt die Einzelheit C, dass die Ausnehmung 30 vollständig befüllt ist, das Bezugszeichen 84 zeigt die Füllung. Die Oberfläche 88 der Metalldekorschicht 16 bzw. des damit versehenen Dekorbauteils 10 ist glatt und bündig.

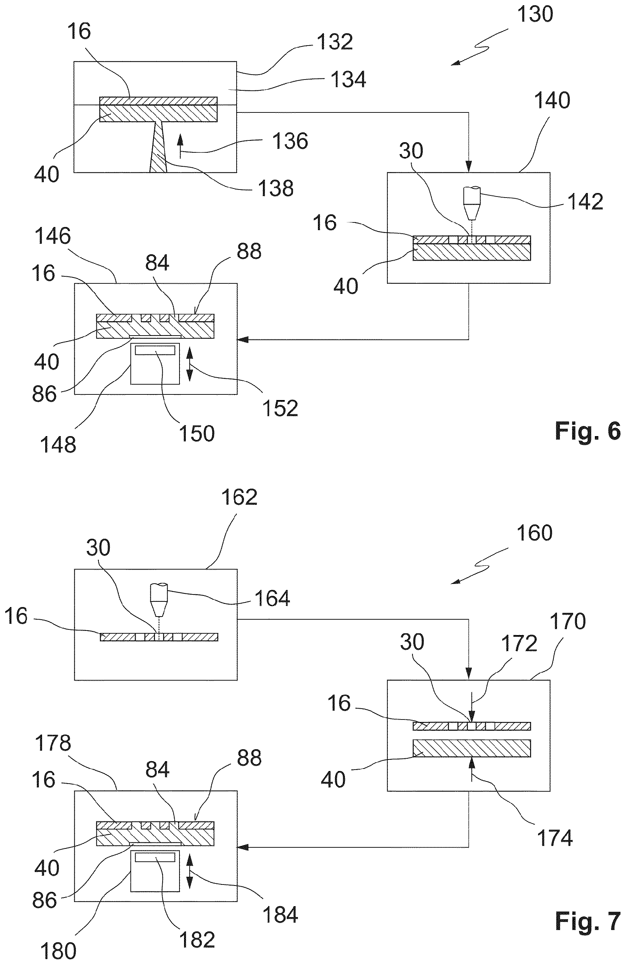

Mit Bezugnahme auf Fig. 6 und Fig. 7 werden anhand schematisch stark vereinfachter Darstellungen beispielhafte Ausführungsformen von Anlagen 130, 160 zur Herstellung von Dekorbauteilen veranschaulicht und näher erläutert.

Fig. 6 zeigt eine Anlage 130, die mit einer Fügeeinrichtung 132 versehen ist, die auch als Spritzgussvorrichtung bezeichnet werden kann. Die Fügeeinrichtung 132 weist eine Form 134 auf, die auch als Spritzgussform bzw. Spritzgusswerkzeug bezeichnet werden kann. Die Fügeeinrichtung 132 ist zum Hinterspritzen einer Metalldekorschicht 16 ausgebildet, die in die Form 134 eingelegt werden kann. Auf diese Weise wird durch das Hinterspritzen eine Trägerschicht 40 ausgebildet. Ein mit 136 bezeichneter Pfeil veranschaulicht das Zuführen der Schmelze über einen Kanal 138. Auf diese Weise kann bereits ein hinterspritzter Verbundkörper gestaltet werden, der die Metalldekorschicht 16 und die Trägerschicht 14 umfasst.

Die Anlage 130 weist ferner eine Metallbearbeitungseinrichtung 140 auf, die ein Metallbearbeitungswerkzeug 142 umfasst. Mit dem Metallbearbeitungswerkzeug 142 können Ausnehmungen 30 in die Metalldekorschicht 16 eingebracht werden. Dies erfolgt gemäß der in Fig. 6 veranschaulichten Ausführungsform beispielhaft in einem Zustand, in dem die Metalldekorschicht 16 bereits mit der Trägerschicht 40 gefügt ist. Dies ist jedoch nicht einschränkend zu verstehen.

Ferner weist die Anlage 130 eine mit 146 bezeichnete Prägeeinrichtung auf, die auch als Prägewerkzeug bezeichnet werden kann. Die Prägeeinrichtung 146 weist einen Prägestempel 148 auf, der mit einer Heizeinheit 150 zum zumindest partiellen Erweichen der Trägerschicht 40 versehen ist. Der in Fig. 6 gezeigte Prägestempel 148 ist beispielhaft an eine Mehrzahl von Ausnehmungen 30 in der Metalldekorschicht 16 angepasst, um das erweichte Kunststoffmaterial der Trägerschicht 40 in die Ausnehmungen 30 einzubringen, um diese möglichst bündig zu befüllen. Ein mit 152 bezeichneter Pfeil veranschaulicht die Bewegung des Prägestempels 148.

Der Prägestempel 148 verdrängt Material und schiebt dieses in die Ausnehmungen 30 der Metalldekorschicht 16 hinein. Die dortigen Füllungen 84 sorgen für einen bündigen Abschluss mit der Oberfläche 88 der Metalldekorschicht 16. An der Rückseite der Trägerschicht 40 verbleibt eine Senkung 86.

Fig. 7 veranschaulicht eine grundsätzlich ähnlich gestaltete Anlage 160, die ebenso zur Erzeugung eines Dekorbauteils 10 mit einer Metalldekorschicht 16 und einer Trägerschicht 40 ausgebildet ist.

Die Anlage 160 weist eine Metallbearbeitungseinrichtung 162 auf, die mit einem Metallbearbeitungswerkzeug 164 versehen ist. Die Metallbearbeitungseinrichtung 162 ist dazu ausgebildet, eine Mehrzahl oder Vielzahl kleiner Ausnehmungen 30 in der Metalldekorschicht 16 zu erzeugen, und zwar in einem Zustand, in dem die Metalldekorschicht 16 noch nicht mit der Trägerschicht 40 gefügt ist. Mit anderen Worten kann die Metallbearbeitungseinrichtung 162 ein perforiertes Dünnblech/Feinblech geringer Dicke erzeugen.

Die Anlage 160 weist ferner eine Fügeeinrichtung 170 auf, die beispielsweise dazu ausgebildet ist, durch Laminieren einen Verbund aus der Metalldekorschicht 16 und der Trägerschicht 40 zu erzeugen. Die Fügeeinrichtung 170 kann demgemäß auch als Laminiereinrichtung bezeichnet werden. Der Fügevorgang bzw. die Fügebewegung in der Fügeeinrichtung 170 werden in Fig. 7 durch mit 172, 174 bezeichnete Pfeile veranschaulicht. Das Laminieren kann ein Verkleben der Metalldekorschicht 16 mit der Trägerschicht 40 umfassen.

Es schließt sich ähnlich wie bei der in Fig. 6 veranschaulichen Anlage 130 auch bei der Anlage 160 in Fig. 7 eine Prägeeinrichtung 178 an, die auch als Prägewerkzeug bezeichnet werden kann. Die Prägeeinrichtung 178 weist einen Prägestempel 180 auf, der mit einer Heizeinheit 182 zum zumindest partiellen Erweichen der Trägerschicht 40 versehen ist. Der in Fig. 7 gezeigte Prägestempel 180 ist beispielhaft an eine Mehrzahl von Ausnehmungen 30 in der Metalldekorschicht 16 angepasst, um das erweichte Kunststoffmaterial der Trägerschicht 40 in die Ausnehmungen 30 einzubringen, um diese möglichst bündig zu befüllen. Ein mit 184 bezeichneter Pfeil veranschaulicht die Bewegung des Prägestempels 180.

Der Prägestempel 180 verdrängt Material und schiebt dieses in die Ausnehmungen 30 der Metalldekorschicht 16 hinein. Die dortigen Füllungen 84 sorgen für einen bündigen Abschluss mit der Oberfläche 88 der Metalldekorschicht 16. An der Rückseite der Trägerschicht 40 verbleibt eine Senkung 86.

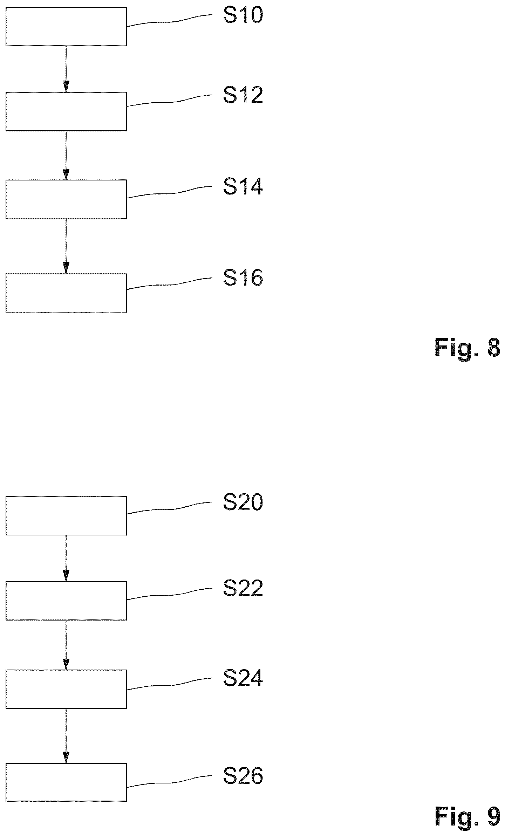

Unter Bezugnahme auf Fig. 8 wird anhand eines schematischen Blockdiagramms eine beispielhafte Ausführungsform eines Verfahrens zur Herstellung eines Dekorbauteils, insbesondere zur Herstellung eines Blendenbauteils, veranschaulicht.

Das Verfahren umfasst einen ersten Schritt S10, der die Bereitstellung einer Metalldekorschicht aus einem Feinblech oder Dünnblech umfasst. Es schließt sich ein Schritt S12 an, der ein Erzeugen von Löchern/Ausnehmungen/Perforierungen in der Metalldekorschicht betrifft. Vorzugsweise sind die Ausnehmungen derart filigran gestaltet, dass sich beim Betrieb der Metalldekorschicht ein sogenannter Verschwindeeffekt einstellt, wenn Gestaltelemente, die durch die Ausnehmungen definiert werden und beleuchtbar sind, für einen Beobachter aus einer bestimmten Entfernung unsichtbar oder nahezu unsichtbar werden, wenn die Beleuchtung der Gestaltelemente deaktiviert wird.

In einem weiteren Schritt S14 erfolgt ein Fügen der Metalldekorschicht mit einer Trägerschicht. Insbesondere kann der Schritt S14 ein stoffschlüssiges Fügen umfassen. Das Fügen kann ein Hinterspritzen der Metalldekorschicht umfassen, wobei hiervon auch die Erzeugung der Trägerschicht mittels Spritzguss umfasst ist. Alternativ kann das Fügen auch eine Laminieren/Verkleben der Metalldekorschicht mit der Trägerschicht umfassen. Vorzugsweise wird die Trägerschicht aus einem Kunststoffmaterial gebildet. Insbesondere kann es sich hierbei um ein Kunststoffmaterial handeln, welches zumindest teilweise transparent und/oder transluzent ist.

Es versteht sich, dass die Trägerschicht auch weitere Bestandteile neben dem zumindest teilweise transparenten und/oder transluzenten Kunststoffmaterial aufweisen kann. Die Trägerschicht muss nicht vollständig aus dem zumindest teilweise transparenten und/oder transluzenten Kunststoffmaterial bestehen.

Ein weiterer sich anschließenden Schritt S16 betrifft einen Prägevorgang. Der Prägevorgang zielt darauf ab, dass Kunststoffmaterial, das die Trägerschicht bildet, zumindest abschnittsweise in einem zumindest teilweise erweichten Zustand derart zu verdrängen, dass die Ausnehmungen in der Metalldekorschicht sicher und bündig mit dem Kunststoffmaterial befüllt werden. Vorzugsweise erfolgt das Prägen in einer Prägevorrichtung bzw. mit einem Prägestempel, die mit einer Heizeinrichtung zum Erweichen des Kunststoffs versehen sind.

Es ist grundsätzlich vorstellbar, die Schritte S14 und S16 zusammenzufassen, etwa in einem kombinierten Spritzprägevorgang in einem Spritzprägewerkzeug.

Unter Bezugnahme auf Fig. 9 wird anhand eines schematischen Blockdiagramms eine weitere beispielhafte Ausführungsform eines Verfahrens zur Herstellung eines Dekorbauteils, insbesondere zur Herstellung eines Blendenbauteils, veranschaulicht.

Das in Fig. 9 gezeigte Verfahren umfasst die Schritte S20, S22, S24, und S26.Der Schritt S20 betrifft ähnlich wie der Schritt S10 in Fig. 8 die Bereitstellung einer Metalldekorschicht aus einem Feinblech oder Dünnblech.

Der Schritt S22 betrifft das Fügen der Metalldekorschicht mit einer Trägerschicht. Der Fügevorgang erfolgt in einem Zustand der Metalldekorschicht, in dem diese noch nicht mit den Ausnehmungen versehen ist. Analog zu dem Voranstehenden kann auch der Schritt S22 einen Hinterspritzvorgang, einen Laminiervorgang o. ä. umfassen. Vorzugsweise umfasst das Fügen ein stoffflüssiges Fügen. Die Trägerschicht besteht zumindest teilweise aus einem zumindest teilweise transparenten und/oder transluzenten Ku n ststoffwerkstoff.

In einem weiteren Schritt S24 werden im gefügten Zustand der Metalldekorschicht mit der Trägerschicht Ausnehmungen in die Metalldekorschicht eingebracht. Vorzugsweise handelt es sich um filigrane Ausnehmungen in Form von Löchern, Öffnungen, Nuten, etc. Eine Mehrzahl/Vielzahl von Ausnehmungen wird miteinander kombiniert, um gerasterte Gestaltelemente an der Metalldekorschicht auszubilden.

In einem weiteren Schritt S26 folgt ein Prägevorgang. Der Prägevorgang zielt darauf ab, dass Kunststoffmaterial, das die Trägerschicht bildet, zumindest abschnittsweise in einem zumindest teilweise erweichten Zustand derart zu verdrängen, dass die Ausnehmungen in der Metalldekorschicht sicher und bündig mit dem Kunststoffmaterial befüllt werden. Vorzugsweise erfolgt das Prägen in einer Prägevorrichtung bzw. mit einem Prägestempel, die mit einer Heizeinrichtung zum Erweichen des Kunststoffs versehen sind.

## Patentansprüche

1. Verfahren zur Herstellung eines hinterleuchtbaren Dekorbauteils (10), insbesondere eines Blendenbauteils (12), mit den folgenden Schritten:
- Bereitstellung einer Metalldekorschicht (16) aus einem Feinblech, insbesondere einem Dünnblech,
- Fügen der Metalldekorschicht (16) mit einer Trägerschicht (40) aus einem Kunststoff,
wobei die Trägerschicht (40) zumindest teilweise transparent oder transluzent ist, und
wobei die Trägerschicht (40) im gefügten Zustand eine rückwärtige Schicht hinter der Metalldekorschicht (16) bildet, und
- zumindest abschnittsweises Prägen der Trägerschicht (40) in einem zumindest teilweise erweichten Zustand des Kunststoffs, um eine Mehrzahl von Ausnehmungen (30) in der Metalldekorschicht (16) ausgehend von der rückwärtigen Trägerschicht (40) mit dem Kunststoff zu füllen,
**dadurch gekennzeichnet, dass**
die mit dem Kunststoff befüllten Ausnehmungen (30) Rasterelemente (32, 34), insbesondere Bildpunkte, formen, die in Kombination zumindest ein hinterleuchtbares gerastertes Gestaltelement (18) des Dekorbauteils (10) bilden, und
die mit dem Kunststoff befüllten Ausnehmungen (30) bündig mit dem Kunststoff befüllt werden.

2. Verfahren nach Anspruch 1, ferner aufweisend:
- Erzeugen der Ausnehmungen (30) in der Metalldekorschicht (16), wobei zumindest einige der Ausnehmungen (30) eine laterale Ausdehnung (d) von kleiner als 0,3 mm, vorzugsweise von kleiner als 0,2 mm aufweisen.

3. Verfahren nach Anspruch 1 oder 2, wobei die Metalldekorschicht (16) eine Blechdicke (h) im Bereich von 0,05 mm bis 0,5 mm aufweist, vorzugsweise im Bereich von 0,1 mm bis 0,3 mm.

4. Verfahren nach einem der Ansprüche 1 bis 3, wobei ein Aspektverhältnis von zumindest einigen der Ausnehmungen (30) der Metalldekorschicht (16) im Bereich von 0,5:1 bis 1,5:1 liegt, vorzugweise bei etwa 1:1 liegt.

5. Verfahren nach einem der Ansprüche 1 bis 4, wobei zumindest einige der Ausnehmungen (30) durch eine Laserbearbeitung erzeugt werden.

6. Verfahren nach einem der Ansprüche 1 bis 5, wobei zumindest einige der Ausnehmungen (30) in der Metalldekorschicht (16) erzeugt werden, bevor die Metalldekorschicht (16) mit der Trägerschicht (40) gefügt wird.

7. Verfahren nach einem der Ansprüche 1 bis 5, wobei zumindest einige der Ausnehmungen (30) in der Metalldekorschicht (16) erzeugt werden, nachdem die Metalldekorschicht (16) mit der Trägerschicht (40) gefügt wurde.

8. Verfahren nach einem der Ansprüche 1 bis 7, wobei das Fügen der Metalldekorschicht (16) mit der Trägerschicht (40) und das Prägen der Trägerschicht (40) in einem Spritzprägevorgang erfolgt, vorzugsweise in einem kombinierten Spritz- und Prägewerkzeug (112).

9. Verfahren nach einem der Ansprüche 1 bis 7, wobei das Prägen der Trägerschicht (40) in einem Thermoprägevorgang erfolgt, wobei der Kunststoff in einem Prägewerkzeug (70, 146, 178) zumindest abschnittsweise durch Wärmeeintrag erweicht wird.

10. Verfahren nach Anspruch 9, wobei dem Prägevorgang ein Spritzgussvorgang zur Erzeugung der Trägerschicht (40) und zum Fügen der Metalldekorschicht (16) mit der Trägerschicht (40) vorrausgeht.

11. Verfahren nach Anspruch 9, wobei dem Prägevorgang ein Laminiervorgang zum Fügen der Metalldekorschicht (16) mit der Trägerschicht (40) vorausgeht.

## Claims

1. Method for producing a backlightable decorative component (10), particularly a panel component (12), comprising the following steps:
- providing a metal decorative layer (16) made of a fine sheet, particularly a thin sheet,
- joining the metal decorative layer (16) with a carrier layer (40) made of a plastic material,
wherein the carrier layer (40) is at least partially transparent or translucent, and
wherein the carrier layer (40), in the joined state, forms a rear layer behind the metal decorative layer (16), and
- at least partially embossing the carrier layer (40) in an at least partially softened state of the plastic material to fill a plurality of recesses (30) in the metal decorative layer (16) with the plastic material, starting from the rear carrier layer (40),
**characterized in that**
the recesses (30) filled with the plastic material form raster elements (32, 34), particularly pixels, which in combination form at least one backlightable rasterized design element (18) of the decorative component (10), and
the recesses (30) filled with the plastic material are flush filled with the plastic material.

2. Method according to claim 1, further comprising:
- forming the recesses (30) in the metal decorative layer (16), wherein at least some of the recesses (30) have a lateral extension (d) of less than 0.3 mm, preferably less than 0.2 mm.

3. Method according to claim 1 or 2, wherein the metal decorative layer (16) has a sheet thickness (h) in the range of 0.05 mm to 0.5 mm, preferably in the range of 0.1 mm to 0.3 mm.

4. Method according to one of claims 1 to 3, wherein an aspect ratio of at least some of the recesses (30) of the metal decorative layer (16) is in the range of 0.5:1 to 1.5:1, preferably at about 1:1.

5. Method according to one of claims 1 to 4, wherein at least some of the recesses (30) are formed by laser processing.

6. Method according to one of claims 1 to 5, wherein at least some of the recesses (30) are formed in the metal decorative layer (16) before the metal decorative layer (16) is joined with the carrier layer (40).

7. Method according to one of claims 1 to 5, wherein at least some of the recesses (30) are formed in the metal decorative layer (16) after the metal decorative layer (16) is joined with the carrier layer (40).

8. Method according to one of claims 1 to 7, wherein the joining of the metal decorative layer (16) with the carrier layer (40) and the embossing of the carrier layer (40) are performed in an injection compression molding process, preferably in a combined injection and embossing tool (112).

9. Method according to one of claims 1 to 7, wherein the embossing of the carrier layer (40) is performed in a thermo-embossing process, wherein the plastic material is at least partially softened by heat input in an embossing tool (70, 146, 178).

10. Method according to claim 9, wherein the embossing process is preceded by an injection molding process for forming the carrier layer (40) and for joining the metal decorative layer (16) with the carrier layer (40).

11. Method according to claim 9, wherein the embossing process is preceded by a laminating process for joining the metal decorative layer (16) with the carrier layer (40).

## Revendications

1. Procédé permettant la fabrication d'un composant de décoration (10) pouvant être rétroéclairé, en particulier d'un composant formant panneau (12), comportant les étapes suivantes :
- fourniture d'une couche de décoration métallique (16) en une tôle fine, en particulier en une tôle mince,
- assemblage de la couche de décoration métallique (16) avec une couche de support (40) en une matière plastique,
dans lequel la couche de support (40) est au moins partiellement transparente ou translucide, et
dans lequel la couche de support (40) forme, à l'état assemblé, une couche arrière derrière la couche de décoration métallique (16), et
- gaufrage, au moins dans certaines sections, de la couche de support (40) dans un état au moins partiellement ramolli de la matière plastique, afin de remplir de matière plastique une pluralité d'évidements (30) dans la couche de décoration métallique (16) en partant de la couche de support (40) arrière,
**caractérisé en ce que**
les évidements (30) remplis de matière plastique constituent des éléments d'encadrement (32, 34), en particulier des points d'image, qui, en combinaison, forment au moins un élément de configuration (18) encadré et rétroéclairé du composant de décoration (10), et
les évidements (30) remplis de matière plastique sont remplis en affleurement de matière plastique.

2. Procédé selon la revendication 1, présentant en outre :
- la production des évidements (30) dans la couche de décoration métallique (16), dans lequel au moins certains des évidements (30) présentent une extension latérale (d) inférieure à 0,3 mm, de préférence inférieure à 0,2 mm.

3. Procédé selon la revendication 1 ou 2, dans lequel la couche de décoration métallique (16) présente une épaisseur de tôle (h) dans la plage allant de 0,05 mm à 0,5 mm, de préférence dans la plage allant de 0,1 mm à 0,3 mm.

4. Procédé selon l'une des revendications 1 à 3, dans lequel un rapport d'aspect d'au moins certains des évidements (30) de la couche de décoration métallique (16) se situe dans la plage allant de 0,5:1 à 1,5:1, de préférence est d'environ 1:1.

5. Procédé selon l'une des revendications 1 à 4, dans lequel au moins certains des évidements (30) sont produits par un usinage au laser.

6. Procédé selon l'une des revendications 1 à 5, dans lequel au moins certains des évidements (30) sont produits dans la couche de décoration métallique (16) avant que la couche de décoration métallique (16) ne soit assemblée avec la couche de support (40).

7. Procédé selon l'une des revendications 1 à 5, dans lequel au moins certains des évidements (30) sont produits dans la couche de décoration métallique (16) après que la couche de décoration métallique (16) a été assemblée avec la couche de support (40).

8. Procédé selon l'une des revendications 1 à 7, dans lequel l'assemblage de la couche de décoration métallique (16) avec la couche de support (40) et le gaufrage de la couche de support (40) sont effectués dans un processus de moulage par injection-gaufrage, de préférence dans un outil combiné de moulage par injection et de gaufrage (112).

9. Procédé selon l'une des revendications 1 à 7, dans lequel le gaufrage de la couche de support (40) est effectué dans un processus de thermo-gaufrage, dans lequel la matière plastique est ramollie au moins dans certaines sections par apport de chaleur dans un outil de gaufrage (70, 146, 178).

10. Procédé selon la revendication 9, dans lequel un processus de moulage par injection précède le processus de gaufrage pour la production de la couche de support (40) et pour l'assemblage de la couche de décoration métallique (16) avec la couche de support (40).

11. Procédé selon la revendication 9, dans lequel un processus de laminage précède le processus de gaufrage pour l'assemblage de la couche de décoration métallique (16) avec la couche de support (40).
